# FASCICULE DE BREVET EUROPEEN

(11) **EP 3 999 842 B1**
(45) Date de publication et mention de la délivrance du brevet: **24.06.2026**
(21) Numéro de dépôt: 20746583.2
(22) Date de dépôt: 20.07.2020
(51) Int. Cl.: G01N 27/82

(54) **DISPOSITIF DE CONTRÔLE PAR FUITE DE FLUX MAGNÉTIQUE ET PROCÉDÉ ASSOCIÉ**
VORRICHTUNG UND VERFAHREN ZUR LECKPRÜFUNG EINES MAGNETISCHEN FLUSSES UND ZUGEHÖRIGES VERFAHREN
MAGNETIC FLUX LEAKAGE INSPECTION DEVICE AND ASSOCIATED METHOD

(30) Priorité: 19.07.2019 FR 1908245
(43) Date de publication de la demande: 25.05.2022
(73) Titulaire: Framatome, 92400 Courbevoie (FR)
(72) Inventeur: PAON, Alexandre, 71100 CHALON SUR SAONE (FR); TAGLIONE, Matthieu, 71370 ST ETIENNE EN BRESSE (FR); SARTRE, Bernard, 71100 SAINT-REMY (FR); BARGE, Cécile, 67220 NEUBOIS (FR); KERNIN, Yann, 71390 GRANGES (FR)
(74) Mandataire: Lavoix
(86) Numéro de dépôt international: PCT/EP2020/070476
(87) Numéro de publication internationale: WO 2021/013808

(56) Documents cités:
- EP-A2- 2 538 209
- DE-T5- 112015 006 279
- FR-A1- 3 062 481
- US-A- 4 303 883
- US-A- 5 331 278
- US-A1- 2014 191 751
- US-B2- 7 268 541

## Description

La présente invention concerne un procédé de contrôle par fuite de flux magnétique pour le contrôle non destructif d'un objet comprenant au moins une partie ferromagnétique.

Un tel contrôle permet notamment de vérifier l'état d'un objet dans le cadre d'opérations de maintenance, par exemple, de pièces d'un réacteur nucléaire.

US 4 602 212 B décrit un dispositif de contrôle non destructif d'un objet. Pour ce faire, le dispositif utilise en combinaison la génération de courants de Foucault et la détection par fuite de flux magnétique.

Cependant, la détection de défauts par un tel dispositif est complexe car cela nécessite l'analyse de plusieurs données fournies par des capteurs.

US 2014/191751 A1 concerne une méthode et un appareil de test magnétique qui permettent de détecter avec précision un défaut en magnétisant un objet testé à un degré tel que l'objet devient magnétiquement saturé.

DE 11 2015 006279 T5 décrit un appareil d'inspection pour le diagnostic des dommages causés aux câbles, comportant un étrier qui applique un champ magnétique pour placer un câble dans un état de saturation magnétique, un dispositif d'application de champ magnétique alternatif qui fournit un champ magnétique alternatif au câble en fournissant un courant constant à une bobine axiale dans la direction axiale de celui-ci pour provoquer la génération d'un courant de Foucault et d'un champ magnétique de Foucault à l'intérieur du câble.

US 4 303 883 A décrit un appareil magnétisant d'abord un métal de base avec un flux alternatif pour traverser le cordon de soudure du métal de base et le flux de fuite résultant du cordon de soudure est détecté par au moins un élément de recherche de flux pour générer un signal alternatif.

US 5 331 278 A décrit un dispositif de contrôle d'un objet comprenant un aimant à courant continu afin de permettre la mesure d'une boucle d'hystérésis magnétique dudit objet, un aimant à courant alternatif pour appliquer un faible champ magnétique à courant alternatif audit objet afin de permettre la mesure d'une boucle d'hystérésis magnétique mineure dudit objet, et un capteur magnétique mesurant ladite boucle d'hystérésis magnétique et ladite boucle d'hystérésis magnétique mineure dudit objet.

L'un des buts de l'invention est de proposer un procédé de contrôle non destructif permettant une détection simple des défauts.

A cet effet, l'invention a pour objet un procédé de contrôle selon la revendication 1.

Un tel procédé permet de détecter la fuite de flux magnétique par une mesure de champ magnétique selon l'axe normal. Mis en relation avec le champ magnétique généré, cela permet alors de détecter un défaut à l'origine de la fuite de flux magnétique.

La mesure de champ magnétique selon la direction normale permet en outre d'augmenter le signal mesuré, et de réduire le bruit de mesure. Cela rend donc la détection plus facile et plus rapide.

Le dispositif de contrôle du procédé peut en outre présenter une ou plusieurs des caractéristiques ci-dessous, considérée(s) individuellement ou selon toutes les combinaisons techniquement possibles :
- l'unité de mesure du champ magnétique comprend au moins un capteur de champ magnétique, préférentiellement au moins une magnéto résistance géante ;
- le courant d'alimentation alternatif présente une intensité comprise entre 1 A et 15 A ;
- l'électroaimant présente une forme de U comprenant au moins une branche nord et au moins une branche sud, la au moins branche nord et la au moins branche sud étant adaptées pour être placées contre la surface de l'objet à contrôler ;
- l'unité de mesure du champ magnétique est située entre la branche nord et la branche sud ;
- le dispositif est configuré pour que l'unité de mesure soit espacée de la surface de l'objet à contrôler d'une distance inférieure à 2 cm, de préférence inférieure à 1 mm.

Le procédé de contrôle peut en outre présenter une ou plusieurs des caractéristiques des revendications 2 et/ou 3, considérée(s) individuellement ou selon toutes les combinaisons techniquement possibles.

D'autres caractéristiques et avantages de l'invention ressortiront de la description détaillée qui en est donnée ci-dessous, à titre indicatif et nullement limitatif, en référence aux figures annexées, parmi lesquelles :
- [Fig 1] la figure 1 est une vue schématique d'un dispositif de contrôle pour un procédé de contrôle selon un mode de réalisation de l'invention en fonctionnement avec un objet à contrôler ne présentant pas de défaut,
- [Fig 2] la figure 2 est une vue schématique du dispositif de contrôle de la figure 1 avec un objet à contrôler présentant un défaut,
- [Fig 3] la figure 3 est un exemple de mesure de la composante normale et de la composante tangentielle du champ magnétique par l'unité de mesure du dispositif de contrôle de la figure 1 au droit d'un défaut, et
- [Fig 4] la figure 4 est un exemple de la composante normale de la figure 3 après application d'un filtre.

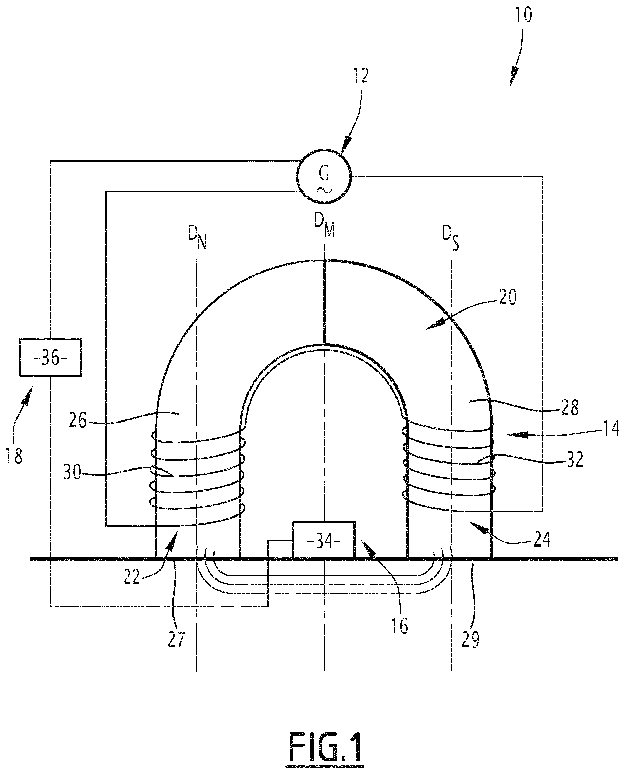

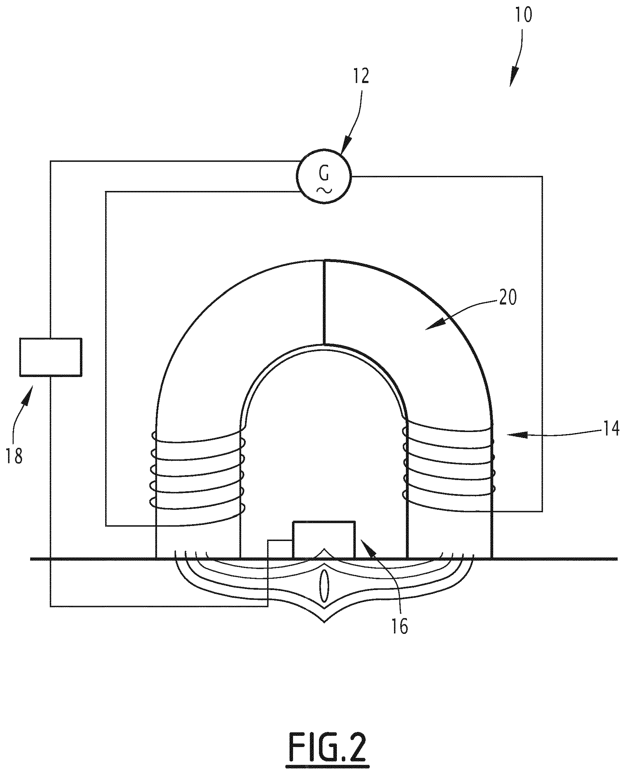

Un dispositif de contrôle 10 pour un procédé de contrôle selon un mode de réalisation de l'invention est représenté sur les figures 1 et 2.

Le dispositif de contrôle 10 est prévu pour le contrôle non destructif par fuite de flux magnétique d'un objet comprenant au moins une partie ferromagnétique. Plus particulièrement, la partie de l'objet à contrôler est ferromagnétique.

L'objet présente une surface externe.

Le dispositif de contrôle 10 est configuré pour être poser contre la surface externe de l'objet, de manière à contrôler l'objet. Plus particulièrement, le dispositif de contrôle 10 est apte à contrôler l'objet jusqu'à deux centimètres (2 cm) de profondeur à partir de la surface externe.

On entend ici par contrôler, détecter un défaut, comme une fissure, dans l'objet.

Le dispositif de contrôle 10 comprend une unité d'alimentation 12, une unité de magnétisation 14, une unité de mesure 16 et une unité de calcul 18.

L'unité d'alimentation 12 est apte à générer un courant d'alimentation alternatif. L'unité d'alimentation 12 comprend, par exemple, un générateur de courant électrique.

L'unité d'alimentation 12 présente, par exemple, un état activé dans lequel elle génère un courant d'alimentation alternatif et un état désactivé, dans lequel elle ne génère pas de courant d'alimentation.

L'unité d'alimentation 12 présente deux bornes de connexion entre lesquelles le courant d'alimentation est généré.

Le courant d'alimentation alternatif présente une fréquence comprise entre 0,1 Hz et 100 Hz.

Une telle fréquence permet notamment de limiter les éventuels courants de Foucault générés dans l'objet, qui serait susceptible de perturber le contrôle.

Plus particulièrement, la fréquence du courant d'alimentation alternatif est réglable au moins dans un intervalle donné compris entre 0,1 Hz et 100 Hz.

Le fait de pouvoir ajuster la fréquence permet de pouvoir faire pénétrer plus ou moins profondément les lignes de champ magnétique à l'intérieur du matériau inspecté. Cela permet notamment d'offrir une meilleure caractérisation du défaut détecté en profondeur.

Le courant d'alimentation alternatif présente une intensité comprise entre 1 A (ampères) et 15 A, plus particulièrement compris entre 2 et 10 A, et plus particulièrement encore entre 4,5 A et 5,5 A.

Plus particulièrement, l'intensité du courant d'alimentation alternatif est réglable au moins dans un intervalle donné compris entre 1 A et 15 A, plus particulièrement compris entre 2 et 10 A, et plus particulièrement encore entre 4,5 A et 5,5 A.

Une telle fréquence et une telle intensité permettent notamment de travailler dans une zone non saturée magnétiquement, c'est-à-dire que l'excitation magnétique ne tend pas vers un palier en fonction de l'induction.

L'unité de magnétisation 14 comprend un électroaimant 20 adapté pour générer un champ magnétique parallèle à une surface de l'objet à contrôler en présence d'un courant d'alimentation alternatif.

Dans l'exemple représenté, le dispositif comprend, par exemple, une unique unité de magnétisation 14 comprenant un unique électroaimant 20, plus particulièrement un unique aimant formé par un électroaimant. L'unique électroaimant comprend, par exemple, deux ou quatre pôles ou éventuellement plus.

L'électroaimant 20 présente ici deux pôles, plus particulièrement un pôle dit nord 22 et un pôle dit sud 24.

Dans l'exemple représenté, l'électroaimant 20 présente une forme de U comprenant une branche nord 26 et une branche sud 28, la branche nord et la branche sud étant adaptées pour être placées contre la surface de l'objet à contrôler.

Plus particulièrement, la branche nord 26 et la branche sud 28 comprennent chacune une surface de contact 27, 29 prévue pour être poser contre la surface de l'objet à contrôler.

La surface de contact 27, 29 est complémentaire de la surface de l'objet à contrôler. Dans l'exemple représenté, chaque surface de contact 27, 29 est plane.

L'électroaimant comprend une bobine nord 30 enroulée autour de la branche nord 26, formant le pôle nord 22, et une bobine sud 32 enroulée autour de la branche sud 28, formant le pôle sud 24.

L'électroaimant 20 est fabriqué dans un matériau possédant une perméabilité magnétique relative élevée, conçu de façon à réduire les courants de Foucault. L'électroaimant comprend, par exemple, un empilement de plaques, par exemple en fer et en silicium ou en fer et en nickel ou d'autres matériaux amorphes.

Chaque bobine est réalisée dans un matériau possédant une haute conductivité électrique, par exemple du cuivre.

La bobine nord 30 et la bobine sud 32 sont identiques.

Les bobines font chacune 20 spires, dans un fil de section 0,8 mm².

Chaque bobine 30, 32 est enroulée autour d'un axe principal respectif D_{S}, D_{N}. Les axes principaux s'étendent parallèlement l'un à l'autre.

Les axes principaux D_{S}, D_{N} sont ici perpendiculaires aux surfaces de contact 27, 29.

L'électroaimant 20 est prévu pour que les axes principaux D_{S}, D_{N} des bobines 30, 32 s'étendent perpendiculairement à la surface de l'objet en train d'être contrôlé.

Le bobinage de chaque bobine 30, 32 s'étend entre une extrémité distale et une extrémité proximale.

L'extrémité distale est prévue pour être plus proche de la surface de l'objet à contrôler que l'extrémité proximale.

Les extrémités proximales des bobines sont reliées entre elles.

L'extrémité distale de la bobine nord 30 est reliée à l'une des bornes de connexion de l'unité d'alimentation 12, l'extrémité distale de la bobine sud 32 étant reliée à l'autre des bornes de connexion de l'unité d'alimentation 12.

L'unité d'alimentation 12 est configurée pour alimenter l'électroaimant 20 par le courant d'alimentation alternatif généré par l'unité d'alimentation 12.

L'unité de mesure 16 du champ magnétique est apte à mesurer le champ magnétique au moins le long d'un axe normal D_{M}.

L'axe normal D_{M} est prévu pour être perpendiculaire à la surface de l'objet à contrôler.

L'axe normal D_{M} est parallèle aux axes principaux D_{S}, D_{N} des bobines 30, 32.

La mesure selon l'axe normal D_{M} permet d'augmenter le signal mesuré, et de réduire le bruit de mesure, par rapport à une mesure selon la direction tangentielle aux lignes de champ du champ magnétique.

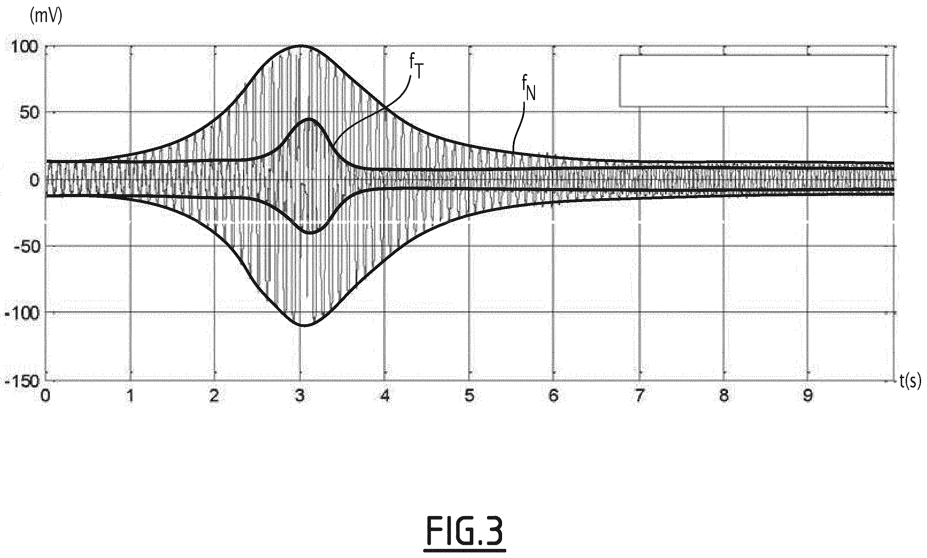

La figure 3 présente la mesure par le capteur f_{N} selon la direction normale et la mesure par le capteur f_{T} selon la direction tangentielle aux lignes de champ du champ magnétique.

Plus particulièrement, sur la figure 3, sont représentées lesdites mesures qui oscillent, ainsi que l'enveloppe desdites mesures.

L'unité de mesure du champ magnétique comprend au moins un capteur 34, ici un unique capteur 34.

Le capteur est, par exemple, apte à mesurer le champ magnétique selon trois axes, dont un axe est l'axe normal.

Le capteur est, par exemple, une magnéto-résistance géante (en anglais « *Giant Magnetoresistance »* ou GMR).

Alternativement, le capteur est un capteur à effet Hall ou une magnétorésitance à effet tunnel (en anglais « Tunnel Magnetoresistance » ou TMR), ou tout autre capteur de champ magnétique.

Alternativement, l'unité de mesure comprend une pluralité de capteurs, par exemple une matrice multiéléments. Chaque élément de la matrice est, par exemple, une magnétorésistance géante. Cela permet notamment de balayer une zone plus importante en un temps donné.

L'unité de mesure 16 du champ magnétique, plus particulièrement le capteur 34, est située entre la branche nord 26 et la branche sud 28, plus particulièrement de manière équidistante.

L'axe normal D_{M} est, par exemple, situé dans le même plan que les axes principaux D_{S}, D_{N} des bobines 30, 32.

Le dispositif est configuré tel que l'unité de mesure 16, plus particulièrement le capteur 34, soit espacée de la surface de l'objet à contrôler d'une distance inférieure à 2 cm, préférentiellement inférieure à 1 mm, en cours de contrôle, plus particulièrement qu'une périphérie du capteur soit collée contre la surface de l'objet.

L'unité de calcul 18 est apte à détecter un défaut dans l'objet à contrôler à partir du champ magnétique mesuré le long de l'axe normal D_{M} et du champ magnétique généré par l'électroaimant 20. Plus particulièrement, le défaut présente une extension selon une direction sensiblement perpendiculaire à la direction des lignes de champ magnétique, plus particulièrement une dimension selon ladite direction supérieure ou égale à trois centimètres.

L'unité de calcul 18 est reliée à l'unité de mesure 16, de sorte que les données mesurées par l'unité de mesure 16 sont communiquées à l'unité de calcul 18.

Plus particulièrement, l'unité de calcul 18 comprend un calculateur 36, le calculateur 36 étant relié à l'unité de mesure 36, plus particulièrement au capteur 34.

L'unité de calcul 18 est en outre apte à contrôler l'activation de l'unité d'alimentation et/ou la fréquence du courant d'alimentation généré et/ou l'intensité du courant d'alimentation généré.

L'unité de calcul 18 est alors reliée à l'unité d'alimentation 12, plus particulièrement au générateur.

Un exemple de procédé de contrôle selon l'invention va maintenant être décrit.

Le procédé de contrôle est, par exemple, réalisé à une température comprise entre 15 et 40°C.

Alternativement, le procédé de contrôle a lieu à une température comprise entre -50°C et 500°C, plus particulièrement entre -50°C et 250°C.

Le procédé de contrôle comprend les étapes suivantes :
- placement d'un dispositif de contrôle 10 tel que décrit précédemment contre une surface de l'objet à contrôler
- alimentation de l'électroaimant 20 par l'unité d'alimentation 12 avec un courant d'alimentation alternatif présentant une fréquence comprise entre 0,1 Hz et 100 Hz,
- mesure du champ magnétique le long de l'axe normal D_{M} par l'unité de mesure 16, et
- détection de la présence éventuelle d'un défaut dans l'objet à contrôler par analyse du champ magnétique mesuré le long de l'axe normal D_{M} et du champ magnétique généré par l'électroaimant 20.

Plus particulièrement, au cours de la détection de la présence éventuelle d'un défaut, le produit du champ magnétique mesuré le long de l'axe normal D_{M} et du champ magnétique généré par l'électroaimant est calculé.

La composante du champ magnétique selon l'axe normal D_{M} est plus facilement observable que la composante selon une direction perpendiculaire à l'axe normal D_{M}, dite tangentielle par rapport à la surface.

Le champ magnétique généré par l'électroaimant 20 est, par exemple, calculé à partir de l'intensité et de la fréquence du courant d'alimentation, ainsi que de paramètres de l'électroaimant 20, tels que des paramètres des bobines 30, 32.

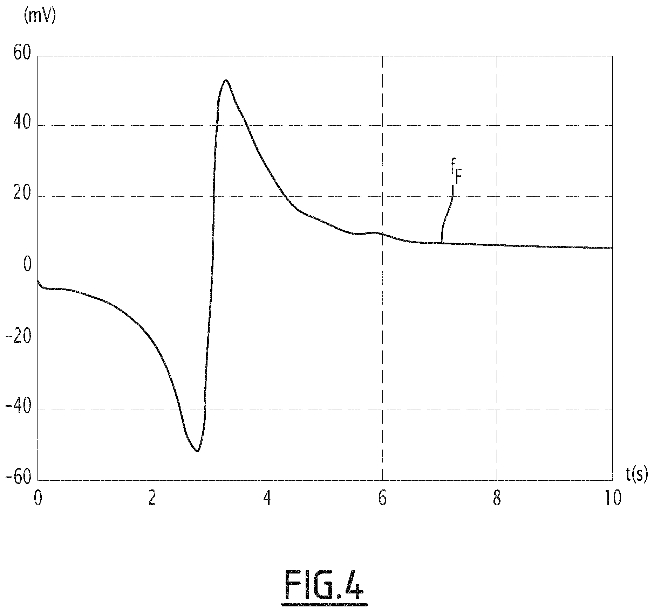

Dans un mode de réalisation particulier, un filtre passe-bas est appliqué sur ledit produit ou préalablement sur la mesure réalisée par l'unité de mesure 16, un exemple de mesure filtrée f_{F} étant représenté sur la figure 4.

Cela permet notamment de réduire le bruit de fond en provenance de l'électronique susceptible de perturber le signal, et/ou de faire disparaitre la composante « fréquentielle » observée sur le signal non filtré.

Une variation brutale du signal brut, du produit, ou du produit sur lequel le filtre passe-bas a été appliqué le cas échéant, est alors détectée.

Lors du passage du capteur sur un défaut, le signal varie d'un facteur deux au minimum, plus particulièrement si le signal est multiplié par deux.

L'observation d'une brusque variation du signal montre la présence d'un défaut.

Le niveau de bruit reste à sa valeur nominale. Le bruit est susceptible d'être dû à l'électronique d'acquisition utilisée, au champ magnétique d'excitation, à l'histoire magnétique du matériau comme la présence de champ magnétique rémanent par exemple, au champ magnétique externe comprenant notamment le champ magnétique terrestre et/ou à d'autres paramètres.

Le dispositif de contrôle comprend en outre un dispositif d'affichage du signal, sur lequel est affichée la variation du signal à l'écran. Un contrôle visuel permet de visualiser une augmentation du signal représentatif d'un défaut.

Dans un mode de réalisation particulier, l'unité de calcul 18 est en outre apte à calculer une cartographie de l'objet sur laquelle les différents défauts détectés sont représentés. Le dispositif d'affichage est alors avantageusement prévu pour afficher une cartographie de l'objet.

Le dispositif de contrôle comprend en outre un système d'alarme, par exemple sonore et/ou visuelle.

Un tel dispositif de contrôle permet ainsi de détecter des défauts formant un angle entre 45° et 90° avec les lignes de champ magnétique généré par l'électroaimant dans l'objet à contrôler jusqu'à une profondeur depuis la surface égale à 2 cm.

Le dispositif de contrôle est prévu pour être déplacé sur la surface externe de l'objet de manière à contrôler l'ensemble de l'objet à contrôler jusqu'à deux centimètres de profondeur depuis la surface.

L'unité de calcul 18 est en outre apte à réaliser **la** cartographie de l'objet en prenant en compte les déplacements du dispositif de contrôle. Alternativement, l'électroaimant 20 est tel que l'unité de magnétisation soit apte à générer un champ magnétique de plus forte ou plus faible intensité. L'électroaimant est, par exemple, réalisé dans un matériau différent tel qu'un empilage de plaques Fer/Nickel, ou matériau amorphe, et/ou avec plus ou moins de bobinages sur les pôles.

Alternativement, l'électro-aimant 20 présente une forme différente de la forme en U de manière à optimiser la propagation des lignes de champ à travers l'objet à inspecter.

Alternativement, l'électroaimant 20 comprend quatre pôles ou plus de manière à détecter des défauts selon différentes orientations en un seul passage.

Alternativement, ce dispositif peut mesurer des champs magnétiques autres que des champs normaux à la surface de la pièce.

Un tel dispositif permet d'enregistrer les signaux de contrôle sur lesquels est visible la présence d'un défaut. Le traitement informatique du signal permet de rendre les informations plus lisibles, en augmentant le rapport signal/bruit par exemple.

Un tel dispositif de contrôle est simple par sa conception et permet en outre de détecter un défaut dans un objet selon un procédé simple sans altérer l'objet.

Un tel dispositif rend possible une automatisation du contrôle de l'objet, par exemple en intégrant le dispositif de contrôle dans un robot, une table s'étendant tangentiellement à la surface externe ou tout autre système adéquat.

Un tel dispositif permet en outre de détecter un défaut avec un champ magnétique de plus faible intensité et sans utiliser d'effluent polluant par rapport à la magnétoscopie dite « classique ».

## Revendications

1. Procédé de contrôle par fuite de flux magnétique d'un objet contenant au moins un matériau ferromagnétique, le procédé comprenant les étapes suivantes :
- placement d'un dispositif de contrôle (10) par fuite de flux magnétique pour le contrôle non destructif d'un objet comprenant au moins une partie ferromagnétique contre une surface de l'objet à contrôler, le dispositif de contrôle (10) comprenant :
- une unité d'alimentation (12) apte à générer un courant d'alimentation alternatif,
- une unité de magnétisation (14) comprenant un électroaimant (20) adapté pour générer un champ magnétique parallèle à une surface de l'objet à contrôler en présence d'un courant d'alimentation alternatif, l'unité d'alimentation (12) étant configurée pour alimenter l'électroaimant (20) du courant d'alimentation alternatif,
- une unité de mesure (16) du champ magnétique apte à mesurer le champ magnétique le long d'un axe normal (D_{M}), ledit axe normal (D_{M}) étant prévu pour être perpendiculaire à la surface de l'objet à contrôler, et
- une unité de calcul (18),
- alimentation de l'électroaimant (20) avec le courant d'alimentation alternatif présentant une fréquence comprise entre 0,1 Hz et 100 Hz, et
- mesure du champ magnétique le long de l'axe normal (D_{M}) par l'unité de mesure (16),
**caractérisé en ce que** l'unité de calcul est apte à détecter un défaut dans l'objet à contrôler à partir du champ magnétique mesuré le long de l'axe normal (D_{M}) et du champ magnétique généré par l'électroaimant (20), et **en ce que** le procédé de contrôle comprend une étape de détection de la présence éventuelle d'un défaut dans l'objet à contrôler par analyse du champ magnétique mesuré le long de l'axe normal (D_{M}) et du champ magnétique généré par l'électroaimant (20), l'étape de détection de la présence éventuelle d'un défaut comprenant une étape de calcul du produit du champ magnétique mesuré le long de l'axe normal (D_{M}) et du champ magnétique généré par l'électroaimant (20).

2. Procédé de contrôle selon la revendication 1, comprenant une étape d'application d'un filtre passe-bas sur le produit avant l'étape de détection de l'augmentation du produit, le procédé comprenant une étape de détection d'une augmentation du produit après application du filtre passe-bas.

3. Procédé de contrôle selon la revendication 1 ou 2, dans lequel un défaut est détecté lorsque le produit est multiplié par un facteur supérieur ou égal à deux.

## Patentansprüche

1. Prüfverfahren durch magnetischen Streufluss eines Objekts, das mindestens ein ferromagnetisches Material enthält, das Verfahren umfassend die folgenden Schritte:
- Platzieren einer Prüfvorrichtung (10) durch magnetischen Streufluss für die zerstörungsfreie Prüfung eines Objekts, umfassend mindestens einen ferromagnetischen Teil, an einer Oberfläche des zu prüfenden Objekts, die Prüfvorrichtung (10) umfassend:
- eine Versorgungseinheit (12), die geeignet ist, um einen Versorgungswechselstrom zu erzeugen,
- eine Magnetisierungseinheit (14), umfassend einen Elektromagneten (20), der angepasst ist, um in Anwesenheit eines Versorgungswechselstroms ein Magnetfeld parallel zu einer Oberfläche des zu prüfenden Objekts zu erzeugen, wobei die Versorgungseinheit (12) konfiguriert ist, um den Elektromagneten (20) mit dem Versorgungswechselstrom zu versorgen,
- eine Messeinheit (16) des Magnetfelds, die geeignet ist, um das Magnetfeld entlang einer Normalachse (D_{M}) zu messen, wobei diese Normalachse (D_{M}) bereitgestellt ist, um senkrecht zu der Oberfläche des zu prüfenden Objekts zu sein, und
- eine Recheneinheit (18),
- Versorgen des Elektromagneten (20) mit dem Versorgungswechselstrom, der eine Frequenz zwischen 0,1 Hz und 100 Hz aufweist, und
- Messen des Magnetfelds entlang der Normalachse (D_{M}) durch die Messeinheit (16),
**dadurch gekennzeichnet, dass** die Recheneinheit geeignet ist, um einen Defekt in dem zu prüfenden Objekt aus dem entlang der Normalachse (D_{M}) gemessenen Magnetfeld und dem von dem Elektromagneten (20) erzeugten Magnetfeld zu erkennen, und dass das Prüfverfahren einen Schritt eines Erfassens des möglichen Vorhandenseins eines Defekts in dem zu prüfenden Objekt durch Analyse des entlang der Normalachse (D_{M}) gemessenen Magnetfelds und des von dem Elektromagneten (20) erzeugten Magnetfelds umfasst, wobei der Schritt eines Erfassens des möglichen Vorhandenseins eines Defekts einen Schritt eines Berechnens des Produkts aus dem entlang der Normalachse (D_{M}) gemessenen Magnetfeld und dem von dem Elektromagneten (20) erzeugten Magnetfeld umfasst.

2. Prüfverfahren nach Anspruch 1, umfassend einen Schritt eines Anwendens eines Tiefpassfilters auf das Produkt vor dem Schritt eines Erfassens einer Zunahme des Produkts, das Verfahren umfassend einen Schritt eines Erfassens einer Zunahme des Produkts nach Anwenden des Tiefpassfilters.

3. Prüfverfahren nach Anspruch 1 oder 2, wobei ein Fehler erfasst wird, wenn das Produkt mit einem Faktor größer als oder gleich wie zwei multipliziert wird.

## Claims

1. A method of testing an object containing at least one ferromagnetic material by magnetic flux leakage, the method comprising the following steps:
- placement of a magnetic flux leakage testing device (10) for non-destructive testing of an object comprising at least one ferromagnetic part against a surface of the object to be tested, the testing device (10) comprising:
- a power supply unit (12) capable of generating an alternating supply current,
- a magnetisation unit (14) comprising an electromagnet (20) adapted to generate a magnetic field parallel to a surface of the object to be tested in the presence of an alternating supply current, the power supply unit (12) being configured to supply the electromagnet (20) with that current,
- a magnetic-field measuring unit (16) capable of measuring along a normal axis (D_{M}), said normal axis (D_{M}) being designed to be perpendicular to the surface of the object to be tested, and
- a calculation unit (18),
- supplying of the electromagnet (20) with an alternating current having a frequency between 0.1 Hz and 100 Hz, and
- measurement of the magnetic field along the normal axis (D_{M}) by the measuring unit (16),
**characterised in that** the calculation unit is capable of detecting a defect in the object to be inspected based on the magnetic field measured along the normal axis (D_{M}) and the magnetic field generated by the electromagnet (20), and **in that** the testing method comprises a step of detecting the possible presence of a defect in the object to be inspected by analysing the magnetic field measured along the normal axis (D_{M}) and the magnetic field generated by the electromagnet (20), the step of detecting the possible presence of a defect comprising a step of calculating the product of the magnetic field measured along the normal axis (D_{M}) and the magnetic field generated by the electromagnet (20).

2. A method of monitoring as claimed in claim 1, comprising a step of applying a low-pass filter to the product prior to the step of detecting an increase in the product, the method comprising a step of detecting an increase in the product after application of the low-pass filter.

3. Control method according to claim 1 or 2, in which a defect is detected when the product is multiplied by a factor of two or more.
